# FASCICULE DE BREVET EUROPEEN

(11) **EP 3 036 442 B1**
(45) Date de publication et mention de la délivrance du brevet: **01.05.2019**
(21) Numéro de dépôt: 14793199.2
(22) Date de dépôt: 01.08.2014
(51) Int. Cl.: F15B 1/02, F15B 3/00, F15B 13/04

(54) **CONVERTISSEUR DE PRESSION HYDRAULIQUE REVERSIBLE A VANNES TUBULAIRES**
UMKEHRBARER HYDRAULIKDRUCKWANDLER MIT ROHRFÖRMIGEN VENTILEN
REVERSIBLE HYDRAULIC PRESSURE CONVERTER WITH TUBULAR VALVES

(30) Priorité: 20.08.2013 FR 1358071
(43) Date de publication de la demande: 29.06.2016
(73) Titulaire: Rabhi, Vianney, 69006 Lyon (FR)
(72) Inventeur: Rabhi, Vianney, 69006 Lyon (FR)
(74) Mandataire: Godard, Xavier
(86) Numéro de dépôt international: PCT/FR2014/052006
(87) Numéro de publication internationale: WO 2015/025094

(56) Documents cités:
- FR-A1- 2 978 215
- US-A- 2 568 262
- US-A- 3 540 348
- US-A1- 2009 178 399

## Description

La présente invention a pour objet un convertisseur de pression hydraulique réversible à vannes tubulaires.

Il existe diverses solutions technologiques pour amplifier et/ou réduire la pression d'un circuit hydraulique. On note qu'il est technologiquement plus difficile d'amplifier ou de réduire la pression d'un débit hydraulique devant être établi en écoulement continu, que d'amplifier ou de réduire la pression d'un débit hydraulique dont il est acceptable que l'écoulement soit discontinu.

On connait d'après l'enseignement décrit dans le brevet US2009/178399 un système de commande pour une machine-outil comportant une source d'énergie hydraulique, un accumulateur hydraulique, un système hydraulique numérique comportant un transformateur hydraulique numérique, un actionneur hydraulique et un élément mobile. L'actionneur hydraulique est relié avec le transformateur hydraulique numérique de manière à pouvoir déplacer l'élément mobile.

On connait également d'après l'enseignement décrit dans le brevet US2568262 un procédé permettant de modifier ou transformer la pression d'un fluide. Pour cela le procédé consiste à faire agir alternativement la pression du fluide sur une surface de chacune de deux paires de surfaces utiles opposées et prévues sur un piston à double effet.

Le principe dominant sur lequel reposent la plupart des amplificateurs ou réducteurs de pression consiste en un piston émetteur rigidement relié à un piston récepteur, les deux dits pistons se déplaçant sur la même course et présentant une section différente. En ce cas, chaque piston coopère avec un cylindre et une culasse, tandis que le piston émetteur communique avec un circuit hydraulique indépendant de celui du piston récepteur. Pour augmenter la pression, le piston émetteur doit être de plus grande section que le piston récepteur, tandis que pour réduire ladite pression, le piston émetteur doit présenter une section plus petite que celle du piston récepteur. Selon ce principe, le débit moyen du circuit hydraulique dont la pression est la plus basse est plus grand que le débit moyen du circuit hydraulique dont la pression est la plus haute.

L'avantage des amplificateurs ou réducteurs de pression à pistons tels qu'ils viennent d'être décrits est leur simplicité, leur compacité, leur prix de revient réduit, et leur rendement élevé sous réserve que lesdits pistons constituent une bonne étanchéité avec le cylindre avec lequel ils coopèrent. En revanche, leur principal inconvénient est leur fonctionnement pulsé et dans une moindre mesure, le fait qu'ils ne permettent pas de récupérer intégralement l'énergie de compression du fluide hydraulique, particulièrement du coté du piston émetteur.

Une autre configuration d'amplificateur ou réducteur de pression consiste en une première pompe hydraulique volumétrique rotative émettrice et une deuxième pompe hydraulique volumétrique rotative réceptrice de cylindrée différente, lesdites pompes étant montées sur un même arbre ou pour le moins, étant synchronisées en rotation par une transmission quel qu'en soit le type. Selon ladite autre configuration, les pistons des amplificateurs ou réducteurs de pression à pistons sont remplacés par lesdites pompes, ces dernières pouvant être de tout type connu de l'homme de l'art.

L'avantage des amplificateurs ou réducteurs de pression à pompes hydrauliques volumétriques rotatives consiste essentiellement en une meilleure continuité de l'écoulement du fluide hydraulique à la fois du coté haute-pression, et du coté basse-pression. Un autre avantage consiste en la possibilité d'intercaler plus facilement une transmission définissant différents rapports de rotation entre la pompe émettrice et la pompe réceptrice. Une alternative à cette dernière solution consiste en prévoir qu'au moins l'une des deux pompes soit à cylindrée variable.

Le problème des amplificateurs ou réducteurs de pression à pompes hydrauliques volumétriques rotatives est leur coût, leur complexité, leur encombrement et leur rendement qui est en général plus faible que celui des amplificateurs ou réducteurs de pression à pistons.

On note que de nombreux amplificateurs ou réducteurs de pression à pistons opposés destinés à produire un écoulement quasiment continu ont fait l'objet de brevets d'invention. On remarque par exemple le brevet publié sous le n° FR 2889265 qui prévoit un piston basse-pression dit « piston différentiel » délimitant deux chambres basse-pression et actionnant deux pistons haute-pression placés de part et d'autre dudit piston basse-pression, tandis qu'un distributeur comporte un tiroir de commutation actionné par des moyens mécaniques actionnés par le piston basse-pression, lesdits moyens étant en l'occurrence des doigts de commande que vient pousser le piston basse-pression en fin de course.

Selon cette configuration, chaque piston haute-pression constitue, avec son cylindre et avec des clapets avec lesquels il coopère, une pompe haute-pression, les pistons haute-pression que comporte cette dernière étant mus en translation longitudinale alternée par le piston basse-pression dont les faces sont alternativement et en opposition de phase exposées à une pression hydraulique basse-pression. On comprend que le piston basse-pression est constitutif d'un étage basse-pression tandis que les pistons haute-pression concourent à réaliser un étage haute-pression.

On comprend également à la lecture du brevet n° FR 2889265 que seule l'amplification de pression est possible, la réduction de pression n'étant pas prévue par le dispositif. En effet, selon ledit brevet n° FR 2889265, l'étage haute-pression ne peut être que récepteur et non moteur car il constitue, de fait, une pompe.

On remarque le brevet publié sous le n° FR 2575792 qui décrit un amplificateur de pression hydraulique fonctionnant de façon analogue sauf que le piston basse-pression présente deux sections différentes sur chacune de ses faces. Dans le premier sens de déplacement du piston basse-pression, seule la face de petite section est exposée à une pression hydraulique basse-pression tandis que dans le deuxième sens de déplacement dudit piston, la face de grande section produit un effort antagoniste et deux fois plus élevé que celui produit par la face de petite section, les deux dites faces restant simultanément exposées à la pression hydraulique basse-pression. Le résultat obtenu est similaire à celui que produit l'amplificateur de pression à pistons opposés que protège le brevet n° FR 2889265. Outre la configuration particulière de son piston basse-pression, le brevet n° FR 2575792 se distingue du brevet n° FR 2889265 en ce que l'inversion du sens de déplacement dudit piston est provoquée par des lumières que peut obturer ou ouvrir ledit piston en fin de course et ceci, afin de manoeuvrer en translation un tiroir de commutation sous l'effet, là aussi, de deux faces axiales opposées et de section effective différente qu'expose simultanément ou non ledit tiroir à la pression hydraulique passe-pression.

On comprend à la lecture du brevet n° FR 2575792 que dans ce cas également, seule l'amplification de pression est possible pour des raisons analogues à celles qui fixent la même limite fonctionnelle au dispositif que décrit le brevet n° FR 2889265.

Le brevet n° US 5984026 relève du même principe que les deux brevets précédents, au détail près que le tiroir de commutation est manoeuvré à la fois par des moyens mécaniques coopérant avec le piston basse-pression, et par la pression hydraulique qui exerce un effort alternativement sur l'une ou l'autre face dudit tiroir ce qui conséquemment, déplace ce dernier.

En ce dernier cas aussi, seule l'amplification de pression est possible pour des raisons analogues à celles qui fixent la même limite fonctionnelle aux dispositifs décrits dans les brevets n° FR 2889265 et n° FR 2575792.

Le brevet n° EP 0234798 présente d'autres variantes du même principe et prévoit un piston basse-pression délimitant deux chambres basse-pression pour former un étage basse-pression, ledit piston actionnant deux pistons haute-pression placés de part et d'autre dudit piston basse-pression similairement à ce qui a été exposé dans les trois brevets précédents. Ledit brevet n° EP 0234798 prévoit cette fois un distributeur de fluide hydraulique basse-pression étagé, qui comprend un tiroir de commutation primaire actionné par des moyens mécaniques coopérant avec le piston basse-pression tandis que ledit tiroir pilote la pression de commutation appliquée alternativement aux deux faces axiales d'un tiroir de commutation secondaire à soupapes et à sièges.

D'autres variantes exposées dans le brevet n° EP 0234798 consistent notamment en un tiroir de commutation piloté en translation par un vérin mécanique dont la vis est actionnée en rotation par un câble relié au piston basse-pression.

On remarque que là encore, les variantes du brevet n° EP 0234798 ne s'intéressent qu'à l'étage basse-pression de l'amplificateur de pression. L 'étage haute-pression reste en effet une pompe hydraulique à deux pistons plongeurs opposés. Ces variantes ne sont donc pas réversibles afin de permettre la réduction de pression, comme ne sont également pas réversibles les amplificateurs de pression tels que décrits dans les brevets n° FR 2889265, FR 2575792 et US 5984026.

On constate que des produits sont commercialisés qui reposent sur ces principes et qui notamment permettent de générer des pressions très élevées, à partir de sources de pression plus basses. Ceci est par exemple le cas de la société « Hydroprocess » qui propose des amplificateurs de pression à piston basse-pression à double effet actionnant deux pistons haute-pression placés de part et d'autre dudit piston basse-pression, ces amplificateurs pouvant par exemple être utilisés dans des système de découpé par jet d'eau.

On remarque que les dispositifs décrits ne sont donc que des amplificateurs de pression et ne sont pas réversibles. Ceci provient du fait que l'étage haute-pression opère comme une pompe seule est n'est pas équipé d'un commutateur, tandis que l'étage basse-pression est dessiné pour seulement opérer comme un moteur, son dispositif de commutation n'étant pas prévu pour permettre audit étage basse-pression d'opérer comme une pompe.

On remarque d'ailleurs que l'étage haute-pression s'accommoderait difficilement de commutateurs à tiroir ou à lumières tels que prévus par les différents brevets précédemment décrits car les pression très élevées ordinairement recherchées rendent toute fuite au niveau de tiroirs ou de lumières préjudiciables au rendement, que lesdites fuites interviennent durant la manoeuvre d'ouverture ou d'obturation desdits tiroirs ou lumières, ou durant le maintien en fermeture de ces derniers qui sont par nature imparfaitement étanches sous très haute pression. Il faudrait alors prévoir des actionneurs à soupapes, à pointeau ou à levée de bille car ces dispositifs sont naturellement étanches, toutefois, ils génèrent des efforts de manoeuvre élevés.

Il serait d'une grande utilité de pouvoir disposer de convertisseurs de pression réversibles permettant par exemple de stocker un fluide sous haute pression dans un accumulateur de pression à partir d'un moteur-pompe hydraulique moyenne ou basse-pression, pour ensuite restituer audit moteur-pompe ledit fluide à basse-pression à partir dudit fluide stocké sous haute pression dans ledit accumulateur.

Cette disposition particulière permettrait notamment de réaliser des véhicules automobiles à transmission hybride hydraulique dotés d'un système de stockage-restitution d'huile sous pression à forte capacité énergétique sous un faible encombrement, tout en assurant la compatibilité de la haute-pression de stockage de ladite huile avec la basse pression de fonctionnement du moteur-pompe hydraulique utilisé, ou encore, tout en évitant de faire fonctionner ledit moteur-pompe sous haute pression lorsque la puissance selon laquelle il stocke ou réutilise ladite huile sous pression est faible.

Selon ce principe donc, un moteur-pompe basse-pression pourrait être couplé à un accumulateur très haute-pression offrant une densité énergétique volumétrique élevée et se comportant - vu dudit moteur-pompe - comme un accumulateur basse-pression. Ce principe résoudrait un problème crucial d'encombrement lié au stockage d'énergie à bord des véhicules automobiles équipés d'une transmission hybride hydraulique telle que celle mise en oeuvre sur le véhicule prototype développé par la société « PSA Peugeot-Citroën » et connu sous le nom de « Hybrid Air ».

Ainsi, un accumulateur très haute-pression couplé à un convertisseur de pression réversible offrirait par exemple deux pressions différentes pour stocker et pour restituer de l'énergie. Si ce principe était mis au service d'une transmission hybride hydraulique, la haute pression serait utilisable en mettant le moteur-pompe de ladite transmission directement en liaison avec ledit accumulateur très haute-pression tandis que la basse pression serait utilisable en mettant ledit moteur-pompe en liaison avec ledit accumulateur par l'intermédiaire dudit convertisseur.

Ceci permettrait notamment d'optimiser le rendement dudit moteur-pompe celui-ci n'étant relié à la haute pression que lorsqu'il est utilisé à hautes puissances tandis qu'il reste relié à la basse pression lorsqu'il est utilisé à basses puissances.

Ce principe serait avantageusement mis en oeuvre par exemple en combinaison avec le moteur-pompe décrit dans la demande de brevet n° 1354562 en date du 22 mai 2013 appartenant au demandeur, ledit moteur-pompe étant compatible avec les très hautes pressions, de l'ordre de deux-mille bars. Sous réserve au moins de la configuration technique exposée dans ledit brevet, cette pression opérationnelle élevée permet audit moteur-pompe de délivrer une excellent rendement, du moins lorsque ledit moteur-pompe est utilisé au minimum à mi cylindrée. En dessous de cette mi cylindrée, sous haute pression, le rendement dudit moteur-pompe se dégrade immanquablement du fait d'une fraction grandissante de la fraction irrécupérable du travail investi pour comprimer l'huile, et de pertes par frottement importantes relativement au travail utile transmis. Donc, à faibles puissances, utiliser - du coté du moteur-pompe - une pression plus faible pour stocker-déstocker de l'énergie améliorerait notablement le rendement global d'une transmission hybride hydraulique basée sur ledit moteur-pompe.

En outre de nombreuses applications dans le domaine industriel et domestique seraient potentiellement intéressées par un tel convertisseur de pression réversible.

C'est donc pour s'affranchir des limites fonctionnelles des amplificateurs de pression et pour notamment, améliorer le rendement et réduire l'encombrement des transmissions hybrides hydrauliques que le convertisseur de pression hydraulique réversible à vannes tubulaires selon l'invention propose, selon le mode de réalisation retenu :
- Une parfaite réversibilité, ledit convertisseur pouvant être indifféremment utilisé comme amplificateur ou comme réducteur de pression et passer à tout moment de la fonction d'amplificateur de pression à celle de réducteur de pression, et inversement ;
- Un rendement élevé, que ledit convertisseur soit utilisé comme amplificateur de pression ou comme réducteur de pression ;
- Une grande simplicité de réalisation ;
- Un prix de revient modéré ;
- Une bonne contrôlabilité et un débit régulier ;
- Une robustesse et une longévité particulièrement élevées ;
- Une compatibilité avec les très hautes pressions, jusqu'à deux mille bars et plus.

Les autres caractéristiques de la présente invention ont été décrites dans la description et dans les revendications secondaires dépendantes directement ou indirectement de la revendication principale.

Le convertisseur de pression hydraulique réversible à vannes tubulaires suivant la présente invention comprend :
- Un étage moyenne-pression constitué d'un cylindre moyenne-pression dont les deux extrémités sont chacune fermées par une culasse moyenne-pression, et dans lequel peut translater de façon étanche un piston à double effet moyenne-pression qui présente face à chaque culasse moyenne-pression une face de pression tandis que ledit cylindre, lesdites culasses et lesdites faces de pression forment deux chambres moyenne-pression positionnées axialement de part et d'autre du piston à double effet moyenne-pression ;
- Au moins un étage haute-pression constitué d'une tige de liaison inter-pistons par face de pression ladite tige qui comporte une première extrémité solidaire du piston à double effet moyenne-pression et une deuxième extrémité solidaire d'un piston haute-pression, ladite tige traversant de façon étanche la culasse moyenne-pression qui est positionnée de son coté de sorte à déboucher dans un cylindre haute-pression dont le diamètre est plus petit que celui du cylindre moyenne-pression, tandis que le piston haute-pression peut translater de façon étanche dans le cylindre haute-pression ce dernier étant fermé par une culasse haute-pression de sorte à constituer avec ledit piston haute-pression une chambre haute-pression ;
- Au moins une vanne tubulaire par chambre moyenne-pression qui peut mettre cette dernière en relation avec un circuit d'entrée-sortie moyenne-pression, ladite vanne coopérant avec un actionneur de vanne indépendant ;
- Au moins une vanne tubulaire par chambre haute-pression qui peut mettre cette dernière en relation avec un circuit d'entrée-sortie haute-pression, ladite vanne pouvant être actionnée en ouverture ou en fermeture par un actionneur de vanne indépendant ;
- Au moins un capteur de position de piston qui peut transmettre à un calculateur de gestion du convertisseur la position du piston à double effet moyenne-pression ou la position de l'un quelconque des pistons haute-pression.

Lesdites vannes tubulaires suivant la présente invention comprennent au moins un tube rectiligne évidé dans le sens axial pour former un conduit d'équilibrage, ledit tube étant logé avec un faible jeu dans un cylindre de tube avec lequel il constitue une étanchéité, et ledit tube pouvant se déplacer en translation longitudinale dans ledit cylindre ce dernier étant rapporté ou aménagé dans un carter de vanne à l'intérieur duquel est aménagée une chambre annulaire interne dans laquelle débouche un orifice d'entrée-sortie de chambre annulaire qui communique avec un conduit d'entrée-sortie de chambre annulaire, ledit cylindre débouchant dans ladite chambre celle-ci comportant, à l'opposé dudit cylindre et dans le même axe, un siège d'obturation tandis que le tube rectiligne comporte d'une part, une première extrémité située dans la chambre annulaire interne et terminée par une collerette de contact qui peut entrer en contact annulaire avec le siège d'obturation de façon externe au conduit d'équilibrage de sorte à constituer avec ledit siège une étanchéité et d'autre part, une deuxième extrémité qui débouche dans une chambre d'équilibrage et qui est mécaniquement reliée à l'actionneur de vanne, le conduit d'équilibrage établissant une communication entre le siège d'obturation et la chambre d'équilibrage.

Le convertisseur de pression hydraulique réversible à vannes tubulaires suivant la présente invention comprend un conduit d'équilibrage qui communique avec un orifice d'entrée-sortie de tube rectiligne qui communique avec un conduit d'entrée-sortie de tube rectiligne qui est aménagé au centre du siège d'obturation et qui traverse ce dernier dans le sens axial, ledit orifice étant situé à l'intérieur du contact annulaire que peut constituer la collerette de contact avec le siège d'obturation.

Le convertisseur de pression hydraulique réversible à vannes tubulaires suivant la présente invention comprend un conduit d'équilibrage qui communique avec un orifice d'entrée-sortie de tube rectiligne qui débouche dans la chambre d'équilibrage.

Le convertisseur de pression hydraulique réversible à vannes tubulaires suivant la présente invention comprend un tube rectiligne qui comporte au moins un conduit radial d'entrée-sortie aménagé radialement dans ledit tube et dont la première extrémité débouche dans le conduit d'équilibrage tandis que sa deuxième extrémité débouche dans la chambre d'équilibrage.

Le convertisseur de pression hydraulique réversible à vannes tubulaires suivant la présente invention comprend des moyens d'étanchéité qui sont intercalés entre le tube rectiligne et le cylindre de tube.

Le convertisseur de pression hydraulique réversible à vannes tubulaires suivant la présente invention comprend un ressort d'obturation qui coopère avec le tube rectiligne pour maintenir la collerette de contact en contact avec la surface d'obturation.

Le convertisseur de pression hydraulique réversible à vannes tubulaires suivant la présente invention comprend un ressort d'obturation qui coopère avec le tube rectiligne pour maintenir la collerette de contact à une certaine distance de la surface d'obturation.

Le convertisseur de pression hydraulique réversible à vannes tubulaires suivant la présente invention comprend un actionneur de vanne qui comprend une bobine de fil conducteur qui attire un noyau ou palette magnétique lorsque ladite bobine est traversée par un courant électrique, ledit noyau ou palette étant directement ou indirectement solidaire de la deuxième extrémité du tube rectiligne.

Le convertisseur de pression hydraulique réversible à vannes tubulaires suivant la présente invention comprend une bobine de fil conducteur qui est logée à l'intérieur de la chambre d'équilibrage.

Le convertisseur de pression hydraulique réversible à vannes tubulaires suivant la présente invention comprend une bobine de fil conducteur qui est logée à l'extérieur de la chambre d'équilibrage, le champ magnétique généré par ladite bobine lorsqu'elle est traversée par un courant électrique passant au travers de la paroi externe de ladite chambre de sorte à exercer un effort sur le noyau ou palette magnétique.

Le convertisseur de pression hydraulique réversible à vannes tubulaires suivant la présente invention comprend une collerette de contact qui est troncosphérique et qui présente une ligne de contact avec le siège d'obturation similaire à celle que forme une bille portant sur un siège.

Le convertisseur de pression hydraulique réversible à vannes tubulaires suivant la présente invention comprend un siège d'obturation qui est aménagé sur une platine flottante libre de s'aligner radialement avec la collerette de contact lorsque celle-ci entre en contact avec le siège d'obturation tandis que ladite platine porte de façon étanche sur un siège de platine aménagé dans le carter de vanne.

Le convertisseur de pression hydraulique réversible à vannes tubulaires suivant la présente invention comprend une platine flottante qui constitue avec le carter de vanne un clapet anti-retour qui peut s'ouvrir lorsque la pression régnant dans le conduit d'entrée-sortie de tube rectiligne est supérieure à la pression régnant dans la chambre annulaire interne, ladite platine portant sinon de façon étanche sur le siège de platine.

Le convertisseur de pression hydraulique réversible à vannes tubulaires suivant la présente invention comprend une section du contact annulaire formé entre la collerette de contact et le siège d'obturation qui est légèrement plus grande que la section du cylindre de tube.

Le convertisseur de pression hydraulique réversible à vannes tubulaires suivant la présente invention comprend un clapet anti-retour de vanne qui est monté en parallèle de la vanne tubulaire et sur le même circuit, quel que soit ce dernier, ou en série avec ladite vanne et avant ou après cette dernière.

Le convertisseur de pression hydraulique réversible à vannes tubulaires peut compendre un circuit d'entrée-sortie moyenne-pression et/ou un circuit d'entrée-sortie haute-pression qui peut relier la vanne tubulaire avec laquelle il coopère à un accumulateur de pression.

Le convertisseur de pression hydraulique réversible à vannes tubulaires peut comprendre un circuit d'entrée-sortie moyenne-pression et/ou un circuit d'entrée-sortie haute-pression qui peut relier la vanne tubulaire avec laquelle il coopère avec un moteur-pompe hydraulique.

Le convertisseur de pression hydraulique réversible à vannes tubulaires suivant la présente invention comprend un siège d'obturation qui est traversé axialement par un orifice de mise à l'air libre.

Le convertisseur de pression hydraulique réversible à vannes tubulaires peut comprendre une culasse basse-pression et/ou un cylindre haute-pression et/ou une culasse haute-pression et/ou un carter de vanne qui sont réalisés dans une même pièce de matière.

La description qui va suivre en regard des dessins annexés, donnés à titre d'exemples non limitatifs permettra de mieux comprendre l'invention, les caractéristiques qu'elle présente, et les avantages qu'elle est susceptible de procurer.

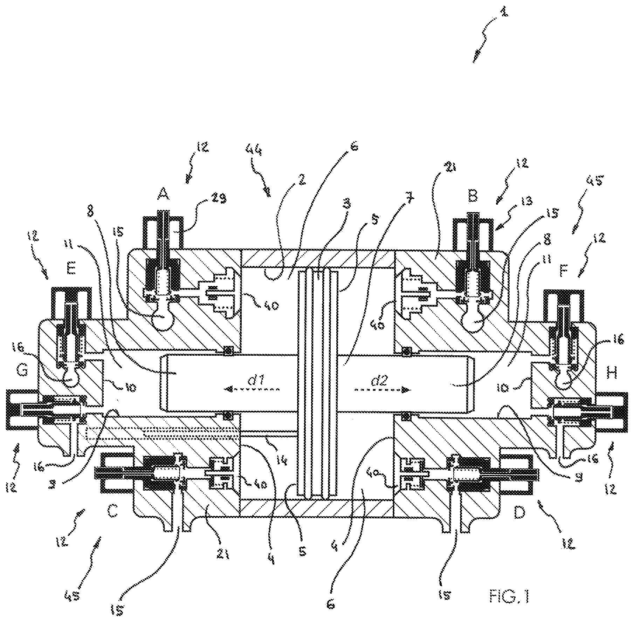

Figure 1 est un exemple de réalisation en coupe schématique du convertisseur de pression hydraulique réversible à vannes tubulaires suivant la présente invention qui prévoit un étage moyenne-pression comportant des vannes tubulaires comportant un tube rectiligne dont la collerette de contact est maintenue à une certaine distance de la surface d'obturation par le ressort d'obturation tandis que les vannes tubulaires de l'étage haute-pression comportent un tube rectiligne dont la collerette de contact est maintenue en contact avec la surface d'obturation par le ressort d'obturation ladite la collerette coopérant avec une platine flottante pour constituer avec le carter de vanne un clapet anti-retour.

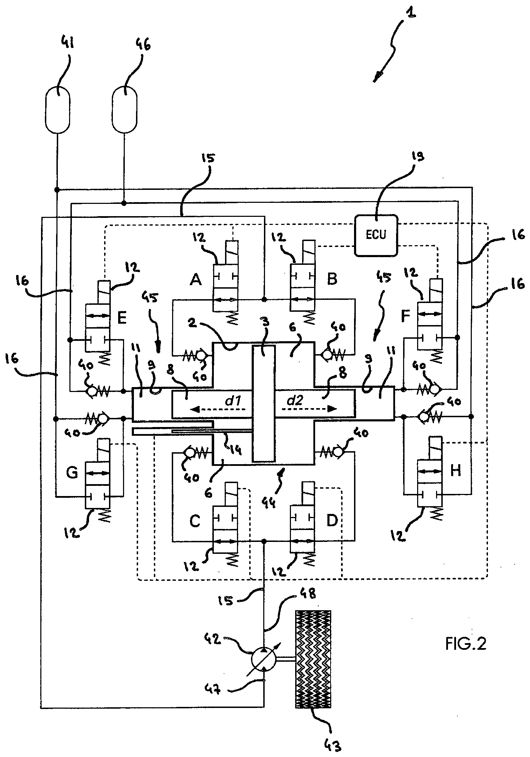

Figure 2 illustre le schéma de principe du convertisseur de pression hydraulique réversible à vannes tubulaires suivant la présente invention tel qu'il peut être mis en oeuvre dans le contexte d'une transmission hybride hydraulique, l'étage moyenne-pression étant intercalé entre une entrée de pompe et une sortie de pompe que comprend un moteur-pompe hydraulique relié à une roue tandis que l'étage haute-pression est intercalé entre un réservoir basse-pression et l'accumulateur de pression.

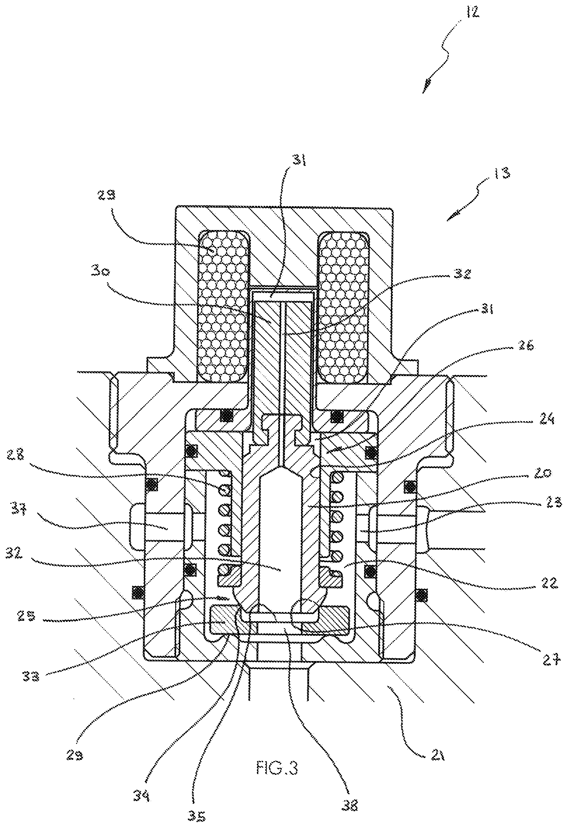

Figures 3 à 5 sont des coupes schématiques illustrant le fonctionnement d'une variante de la vanne tubulaire du convertisseur de pression hydraulique réversible à vannes tubulaires suivant la présente invention, ladite vanne comportant un tube rectiligne dont la collerette de contact est maintenue en contact avec la surface d'obturation par le ressort d'obturation, ladite vanne comportant aussi une platine flottante qui constitue avec le carter de vanne un clapet anti-retour, et ayant un actionneur de vanne constitué d'une bobine de fil conducteur qui peut attirer un noyau ou palette magnétique.

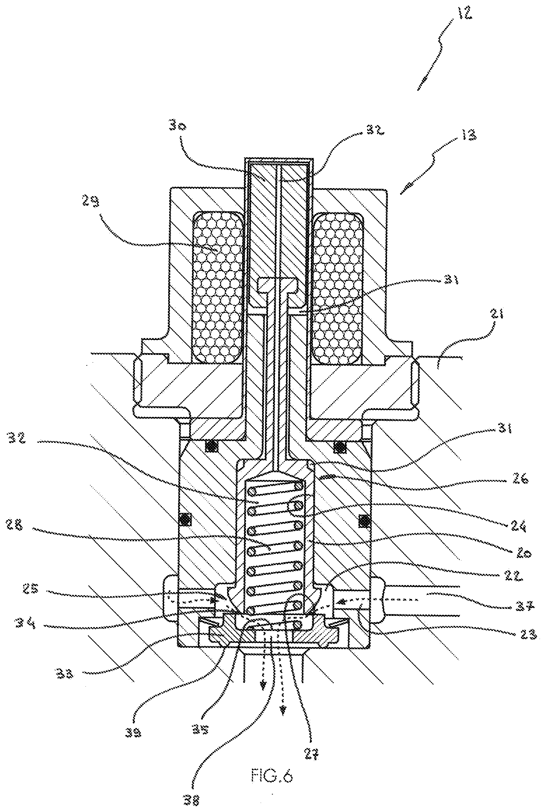

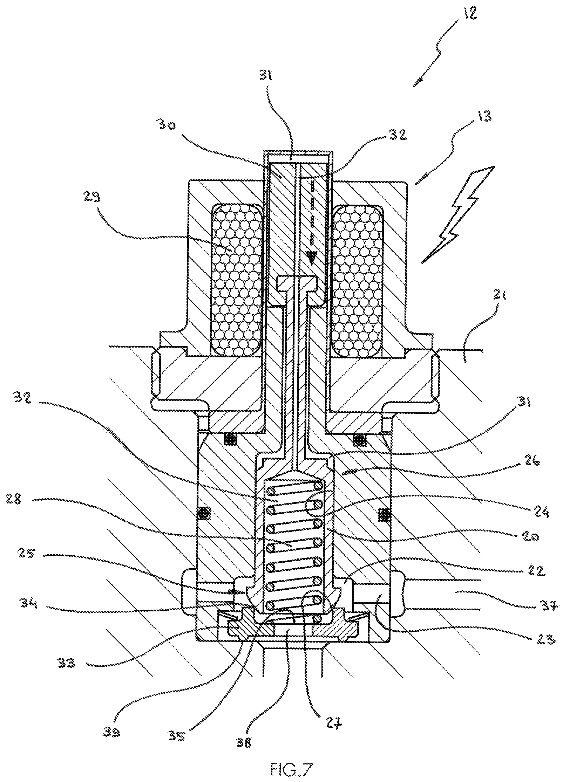

Figures 6 et 7 sont des coupes schématiques illustrant le fonctionnement d'une variante de la vanne tubulaire du convertisseur de pression hydraulique réversible à vannes tubulaires suivant la présente invention, ladite vanne comportant un tube rectiligne dont la collerette de contact est maintenue à une certaine distance de la surface d'obturation par le ressort d'obturation, ladite vanne ayant également un actionneur de vanne qui est constitué d'une bobine de fil conducteur pouvant attirer un noyau ou palette magnétique.

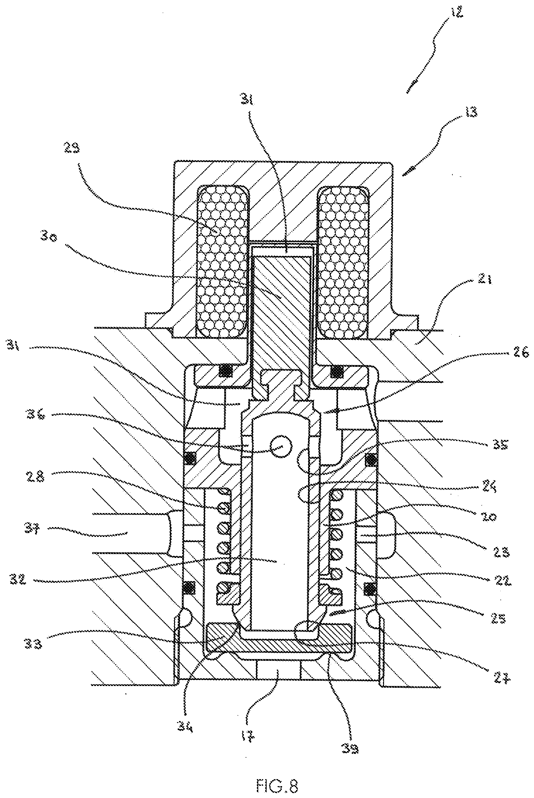

Figure 8 est une coupe schématique d'une variante de la vanne tubulaire du convertisseur de pression hydraulique réversible à vannes tubulaires suivant la présente invention, ladite vanne présentant un tube rectiligne qui comporte des conduits radiaux d'entrée-sortie cependant que la collerette de contact dudit tube est maintenue en contact avec la surface d'obturation par le ressort d'obturation, tandis que l'actionneur de vanne de ladite vanne est constitué d'une bobine de fil conducteur qui peut attirer un noyau ou palette magnétique.

### DESCRIPTION DE L'INVENTION :

On a montré en figures 1 à 8 le convertisseur de pression hydraulique réversible à vannes tubulaires 1.

On voit - particulièrement sur la figure 1 - que le convertisseur de pression hydraulique réversible à vannes tubulaires 1 suivant l'invention comprend un étage moyenne-pression 44 constitué d'un cylindre moyenne-pression 2 dont les deux extrémités sont chacune fermées par une culasse moyenne-pression 4, et dans lequel peut translater de façon étanche un piston à double effet moyenne-pression 3 qui présente face à chaque culasse moyenne-pression 4 une face de pression 5 tandis que ledit cylindre 2, lesdites culasses 4 et lesdites faces de pression 5 forment deux chambres moyenne-pression 5 positionnées axialement de part et d'autre du piston à double effet moyenne-pression 3.

On note que le piston à double effet moyenne-pression 3 peut être muni d'au moins un segment ou d'au moins un joint quel qu'en soit le type connu de l'homme de l'art.

le convertisseur de pression 1 suivant l'invention comprend en outre au moins un étage haute-pression 45 constitué d'une tige de liaison inter-pistons 7 par face de pression 5 ladite tige 7 comportant une première extrémité solidaire du piston à double effet moyenne-pression 3 et une deuxième extrémité solidaire d'un piston haute-pression 8, ladite tige 7 traversant de façon étanche la culasse moyenne-pression 4 qui est positionnée de son coté de sorte à déboucher dans un cylindre haute-pression 9 dont le diamètre est plus petit que celui du cylindre moyenne-pression 2, tandis que le piston haute-pression 8 peut translater de façon étanche dans le cylindre haute-pression 9 ce dernier étant fermé par une culasse haute-pression 10 de sorte à constituer avec ledit piston haute-pression 8 une chambre haute pression 11.

Selon un mode particulier de réalisation du convertisseur de pression 1 selon l'invention, le piston haute pression 8 peut comporter au moins un joint ou au moins un segment, ou bien être de type plongeur pour coopérer avec au moins un joint ou au moins un segment solidaire du cylindre haute-pression 9 pour former une étanchéité la plus poussée possible.

On voit en figures 1 et 2 que le convertisseur de pression 1 suivant l'invention comprend au moins une vanne tubulaire 12 par chambre moyenne-pression 5 pouvant mettre cette dernière en relation avec un circuit d'entrée-sortie moyenne pression 15, ladite vanne 12 coopérant avec un actionneur de vanne 13 indépendant.

Les figures 1 et 2 illustrent également que le convertisseur de pression hydraulique réversible à vannes tubulaires 1 suivant l'invention comprend aussi au moins une vanne tubulaire 12 par chambre haute-pression 11 pouvant mettre cette dernière en relation avec un circuit d'entrée-sortie haute pression 16, ladite vanne 12 pouvant être actionnée en ouverture ou en fermeture par un actionneur de vanne 13 indépendant.

On note d'ailleurs que les vannes tubulaires 12, quelle que soit la chambre 5, 11 dans laquelle elles débouchent, peuvent être à tiroir, à soupape, à pointeau, à boisseau, à levée de bille, à levée de tube ou de tout type connu de l'homme de l'art, tandis que l'actionneur de vanne 13 peut être électrique, pneumatique, ou hydraulique, et peut ouvrir ou fermer la vanne tubulaire 12 à laquelle il est relié ou, le cas échéant, maintenir cette dernière ouverte ou fermée.

Comme le montrent les figures 1 et 2, le convertisseur de pression 1 suivant l'invention comprend aussi au moins un capteur de position de piston 14 qui peut transmettre à un calculateur de gestion du convertisseur 19 la position du piston à double effet moyenne-pression 3 ou la position de l'un quelconque des pistons haute-pression 8. Il est précisé que le capteur de position de piston 14 peut être avec contact, sans contact, de type optique, résistif, inductif, capacitif, à effet hall, ou encore, de tout type connu de l'homme de l'art.

On voit en figure 1 et en figures 3 à 8 que la vanne tubulaire 12 peut comprendre au moins un tube rectiligne 20 évidé dans le sens axial pour former un conduit d'équilibrage 32, ledit tube 20 étant logé avec un faible jeu dans un cylindre de tube 24 avec lequel il constitue une étanchéité, et ledit tube 20 pouvant se déplacer en translation longitudinale dans ledit cylindre 24 ce dernier étant rapporté ou aménagé dans un carter de vanne 21 à l'intérieur duquel est aménagée une chambre annulaire interne 22 dans laquelle débouche un orifice d'entrée-sortie de chambre annulaire 23 qui communique avec un conduit d'entrée-sortie de chambre annulaire 37, ledit cylindre 24 débouchant dans ladite chambre 22 celle-ci comportant, à l'opposé dudit cylindre 24 et dans le même axe, un siège d'obturation 27 tandis que le tube rectiligne 20 comporte d'une part, une première extrémité 25 située dans la chambre annulaire interne 22 et terminée par une collerette de contact 34 qui peut entrer en contact annulaire avec le siège d'obturation 27 de façon externe au conduit d'équilibrage 32 de sorte à constituer avec ledit siège 27 une étanchéité et d'autre part, une deuxième extrémité 26 qui débouche dans une chambre d'équilibrage 31 et qui est mécaniquement reliée à l'actionneur de vanne 13, le conduit d'équilibrage 32 établissant une communication entre le siège d'obturation 27 et la chambre d'équilibrage 31.

Selon cette configuration, comme le montrent les figures 3 à 7, le conduit d'équilibrage 32 peut communiquer avec un orifice d'entrée-sortie de tube rectiligne 35 qui communique avec un conduit d'entrée-sortie de tube rectiligne 38 qui est aménagé au centre du siège d'obturation 27 et qui traverse ce dernier dans le sens axial, ledit orifice 35 étant situé à l'intérieur du contact annulaire que peut constituer la collerette de contact 34 avec le siège d'obturation 27.

Dans ce cas, un fluide peut se déplacer entre la chambre annulaire interne 22 et l'orifice d'entrée-sortie de tube rectiligne 35 sans passer par le conduit d'équilibrage 32 lorsque la collerette de contact 34 est maintenue éloignée du siège d'obturation 27 par l'actionneur de vanne 13, ledit fluide ne pouvant pas opérer un tel déplacement lorsque ladite collerette 34 est laissée en contact annulaire avec le siège d'obturation 27 par l'actionneur de vanne 13, ledit contact constituant une étanchéité entre ladite collerette 34 et ledit siège 27.

Selon la variante montrée en figure 8, le conduit d'équilibrage 32 peut communiquer avec un orifice d'entrée-sortie de tube rectiligne 35 qui débouche dans la chambre d'équilibrage 31. Selon cette autre configuration, un fluide peut se déplacer entre la chambre annulaire interne 22 et l'orifice d'entrée-sortie de tube rectiligne 35 via le conduit d'équilibrage 32 lorsque la collerette de contact 34 est maintenue éloignée du siège d'obturation 27 par l'actionneur de vanne 13, ledit fluide ne pouvant pas opérer un tel déplacement lorsque ladite collerette 34 est laissée en contact annulaire avec le siège d'obturation 27 par l'actionneur de vanne 13, ledit contact constituant une étanchéité entre ladite collerette 34 et ledit siège 27.

La variante exposée en figure 8 montre aussi que le tube rectiligne 20 peut comporter au moins un conduit radial d'entrée-sortie 36 aménagé radialement dans ledit tube 20 et dont la première extrémité débouche dans le conduit d'équilibrage 32 tandis que sa deuxième extrémité débouche dans la chambre d'équilibrage 31.

Le convertisseur de pression hydraulique réversible à vannes tubulaires 1 suivant l'invention prévoit en outre que des moyens d'étanchéité peuvent être intercalés entre le tube rectiligne 20 et le cylindre de tube 24 qui peuvent être constitués d'au moins un joint annulaire et/ou au moins un segment.

En figures 3 à 5 et en figure 8, on a remarqué qu'un ressort d'obturation 28 peut coopérer avec le tube rectiligne 20 pour maintenir la collerette de contact 34 en contact avec la surface d'obturation 27 tandis que l'actionneur de vanne 13 est suffisamment puissant pour appliquer à la deuxième extrémité 26 un effort antagoniste à celui produit par ledit ressort 28 tel, que ledit actionneur 13 peut éloigner ou maintenir éloignée la collerette de contact 34 de la surface d'obturation 27.

A l'inverse, selon la variante exposée en figures 6 et 7, un ressort d'obturation 28 peut coopérer avec le tube rectiligne 20 pour maintenir la collerette de contact 34 à une certaine distance de la surface d'obturation 27 tandis que l'actionneur de vanne 13 est suffisamment puissant pour appliquer à la deuxième extrémité 26 un effort antagoniste à celui produit par ledit ressort 28 tel, que ledit actionneur 13 peut forcer la collerette de contact 34 à entrer en contact avec la surface d'obturation 27 et le cas échéant, peut maintenir ladite collerette 34 en contact avec ladite surface 27.

On note que quelle qu'en soit la configuration tendant à rapprocher ou à éloigner la collerette de contact 34 de la surface d'obturation 27, le ressort d'obturation 28 peut être hélicoïdal, à lame, être constitué d'une ou de plusieurs rondelles élastiques, opérer en traction, en compression, en torsion ou être de façon générale de tout type connu de l'homme de l'art.

Comme montré en figure 1 et en figures 3 à 8, il est possible de prévoit pour le convertisseur de pression hydraulique réversible à vannes tubulaires 1 suivant l'invention que l'actionneur de vanne 13 comprend une bobine de fil conducteur 29 qui attire un noyau ou palette magnétique 30 lorsque ladite bobine 29 est traversée par un courant électrique, ledit noyau ou palette 30 étant directement ou indirectement solidaire de la deuxième extrémité 26 du tube rectiligne 20.

On note que la bobine de fil conducteur 29 et le noyau ou palette magnétique 30 peuvent aussi être remplacés par un empilement de couches piézoélectriques, par un vérin hydraulique étagé connu en soi, par un poumon ou vérin pneumatique ou par tout autre agencement permettant d'exercer un effort sur la deuxième extrémité 26 du tube rectiligne 20.

On note aussi que la bobine de fil conducteur 29 peut être logée à l'intérieur de la chambre d'équilibrage 31 ou bien encore, être logée à l'extérieur de la chambre d'équilibrage 31 comme le montrent tout particulièrement les figures 3 à 8. En ce cas, le champ magnétique généré par ladite bobine 29 lorsqu'elle est traversée par un courant électrique passe au travers de la paroi externe de ladite chambre 31 de sorte à exercer un effort sur le noyau ou palette magnétique 30, ladite paroi externe étant en ce cas préférentiellement réalisée dans un matériau amagnétique.

On remarque - particulièrement sur les figures 3 à 8 - que la collerette de contact 34 peut être troncosphérique et présenter une ligne de contact avec le siège d'obturation 27 similaire à celle que forme une bille portant sur un siège.

Les mêmes figures 3 à 8 montrent en outre que le siège d'obturation 27 peut être aménagé sur une platine flottante 33 libre de s'aligner radialement avec la collerette de contact 34 lorsque celle-ci entre en contact avec le siège d'obturation 27 tandis que ladite platine 33 porte de façon étanche sur un siège de platine 39 aménagé dans le carter de vanne 21, ladite platine 33 pouvant être maintenue plaquée sur le carter de vanne 21 par un ressort pouvant par exemple être une rondelle ondulée.

Selon une variante de réalisation du convertisseur de pression hydraulique réversible à vannes tubulaires 1 suivant l'invention particulièrement illustrée en figures 3 à 5, la platine flottante 33 peut constituer avec le carter de vanne 21 un clapet anti-retour qui peut s'ouvrir lorsque la pression régnant dans le conduit d'entrée-sortie de tube rectiligne 38 est supérieure à la pression régnant dans la chambre annulaire interne 22, ladite platine 33 portant sinon de façon étanche sur le siège de platine 39.

En ce cas, le maintien en contact de la platine flottante 33 avec le siège de platine 39 peut être possiblement assuré par le ressort d'obturation 28 via la collerette de contact 34 qui exerce - grâce audit ressort 28 - un effort sur la surface d'obturation 27 aménagée sur ladite platine 33.

Il est précisé que la section du contact annulaire formé entre la collerette de contact 34 et le siège d'obturation 27 peut être légèrement plus grande que la section du cylindre de tube 24 de sorte que la pression régnant dans la chambre annulaire interne 22 tend à plaquer la collerette de contact 34 contre le siège d'obturation 27 lorsque ladite pression est supérieure à celle régnant dans le conduit d'équilibrage 32.

A titre de variante illustrée de façon schématique en figure 2, un clapet anti-retour de vanne 40 peut être monté en parallèle de la vanne tubulaire 12 et sur le même circuit 15, 16 quel que soit ce dernier, ou en série avec ladite vanne 12 et avant ou après cette dernière, ledit clapet anti-retour 40 pouvant par exemple être une bille, ou encore, une soupape guidée par une queue logée dans un guide, ladite bille ou ladite soupape étant maintenue en contact avec un siège par un ressort.

On note que, comme illustré en figure 2, le circuit d'entrée-sortie moyenne-pression 15 et/ou le circuit d'entrée-sortie haute-pression 16 peut relier la vanne tubulaire 12 avec laquelle il coopère à un accumulateur de pression 41 ce dernier pouvant être à membrane, à piston, à gaz ou à ressort ou de manière générale, de tout type connu de l'homme de l'art.

En outre, le circuit d'entrée-sortie moyenne-pression 15 et/ou le circuit d'entrée-sortie haute-pression 16 peut aussi relier la vanne tubulaire 12 avec laquelle il coopère avec un moteur-pompe hydraulique 42 qui peut être à pistons radiaux ou axiaux, à palette, à vis, à engrenage intérieur ou extérieur, à cylindrée variable ou non, ou de tout type connu en soi. Cette configuration est illustrée en figure 2.

On remarque en figure 8 que le siège d'obturation 27 peut être traversé axialement par un orifice de mise à l'air libre 17 de sorte que la pression régnant dans la chambre annulaire interne 22 et/ou dans la chambre d'équilibrage 31 plaque la platine flottante 33 sur le carter de vanne 21. On note que selon cette configuration, lorsqu'aucune pression ne règne dans lesdites chambres 22, 31, le siège d'obturation 27 reste libre de se centrer par rapport à la collerette de contact 34 étant aidé en cela par l'effort produit par le ressort d'obturation 38.

Enfin, selon une variante de réalisation du convertisseur de pression hydraulique réversible à vannes tubulaires 1 suivant l'invention, la culasse basse-pression 4 et/ou le cylindre haute-pression 9 et/ou la culasse haute-pression 10 et/ou le carter de vanne 21 peuvent être réalisés dans une même pièce de matière.

### FONCTIONNEMENT DE L'INVENTION :

A partir de la description qui précède et en relation avec les figures 1 à 8, on comprend le fonctionnement du convertisseur de pression hydraulique réversible à vannes tubulaires 1 suivant la présente invention.

Pour illustrer le fonctionnement dudit convertisseur 1, on a choisi de l'utiliser pour accumuler de l'énergie dans un accumulateur de pression 41 sous la forme d'un volume d'azote comprimé par un volume d'huile.

Comme montré en figure 2, on a également choisi d'intercaler l'étage moyenne-pression 44 entre une entrée de pompe 47 et une sortie de pompe 48 que comprend un moteur-pompe hydraulique 42 à cylindrée variable dont la pression de fonctionnement maximale est de trois cents bars, tandis qu'on a intercalé l'étage haute-pression 45 entre un réservoir basse-pression 46 qui stocke de l'huile sous basse pression, et un accumulateur de pression 41 dont la pression est comprise - selon cet exemple non limitatif - entre neuf cents bars lorsque ledit accumulateur 41 est vide, et mille huit cents bars lorsque ledit accumulateur 41 est plein.

On a ainsi prévu que la cylindrée de l'étage moyenne-pression 44 est six fois supérieure à celle de l'étage haute-pression 45, c'est à dire que la section utile du piston à double effet moyenne-pression 3 est six fois supérieure à celle des pistons haute-pression 8.

Ainsi configuré, le convertisseur de pression hydraulique 1 peut utiliser le débit d'huile fourni sous une pression trois cents bars par le moteur-pompe hydraulique 42 au niveau de sa sortie de pompe 48 pour stocker de l'énergie sous la forme d'azote comprimé à une pression six fois supérieure de mille huit cents bars dans l'accumulateur de pression 41. Ledit convertisseur 1 peut alors ultérieurement reconvertir ladite énergie en un débit d'huile dont la pression est de trois cents bars, et qui est disponible en entrée de pompe 47 pour entraîner le moteur-pompe hydraulique 42. On note que selon cette configuration, le débit d'huile établi en entrée de pompe 47 est approximativement six fois moins important que celui sortant de l'accumulateur de pression 41.

On note que selon l'exemple d'emploi du convertisseur de pression 1 suivant l'invention pris ici pour en illustrer le fonctionnement, le moteur-pompe hydraulique 42 est relié à au moins une roue 43 d'un véhicule automobile non représenté dans le contexte d'une transmission hybride hydraulique non représentée, laquelle peut comprendre un autre moteur-pompe hydraulique non représenté.

Grâce au convertisseur de pression hydraulique 1 suivant l'invention, malgré que la pression maximale de fonctionnement du moteur-pompe hydraulique 42 ne soit que de trois-cents bars, ce dernier peut freiner le véhicule automobile tout en-en stockant l'énergie cinétique sous la forme d'azote comprimé entre neuf cents et mille huit cents bars dans l'accumulateur de pression 41.

Ainsi, le moteur-pompe hydraulique 42 produit un débit d'huile dont la pression n'est que de cent cinquante bars lorsque l'accumulateur de pression 41 est vide - par exemple en début de freinage régénératif du véhicule automobile - et de trois cents bars seulement lorsque ledit accumulateur 41 est plein, par exemple en fin de freinage dudit véhicule. Les pressions correspondantes régnant dans l'accumulateur de pression 41 sont ainsi respectivement comprises entre neuf cents et mille huit cents bars entre début et fin de freinage régénératif dudit véhicule.

En phase de ré accélération du véhicule automobile, de manière inverse, le convertisseur de pression hydraulique 1 suivant l'invention convertit un débit d'huile sous pression de mille huit cents bars sortant de l'accumulateur de pression 41 en un débit d'huile six fois plus grand mais sous une pression réduite à trois cents bars, forcé en entrée de pompe 47 du moteur-pompe hydraulique 42.

Ainsi, le volume de stockage de l'énergie récupérée au freinage du véhicule automobile est divisé approximativement par six par le convertisseur de pression hydraulique 1 suivant l'invention. En effet, sans ledit convertisseur 1, il serait nécessaire de prévoir - à même énergie stockée - un accumulateur de pression 41 six fois plus volumineux opérant en moyenne sous une pression six fois plus basse.

Selon l'exemple de réalisation du convertisseur de pression 1 suivant l'invention illustré en figure 1, ce dernier est muni de huit vannes tubulaires 12 comprenant chacune un tube rectiligne 20. On suppose ici que la même configuration a été retenue pour mettre en oeuvre ledit convertisseur 1 dans le contexte qu'illustre la figure 2.

Comme le montre la figure 2, pour s'accommoder du fonctionnement particulier du moteur-pompe hydraulique 42, les vannes tubulaires 12 placées sur les circuits d'entrée-sortie moyenne-pression 15 sont montées en série avec un clapet anti-retour de vanne 40 prenant la forme - comme le montre la figure 1 - d'une soupape dont la queue est guidée dans un guide et qui est maintenue en contact avec un siège par un ressort.

Comme on le voit sur la figure 1, les clapets anti-retour de vanne 40 sont positionnés entre le cylindre moyenne-pression 2 et la vanne tubulaire 12 avec laquelle ils coopèrent. Cette configuration permet de laisser le moins de volume mort possible entre le piston à double effet moyenne-pression 3 et l'une ou l'autre des culasses basse-pression 4 lorsque ledit piston 3 est au plus près desdites culasses 4.

On remarque également sur les figures 1 et 2 le capteur de position de piston 14 qui renseigne le calculateur de gestion du convertisseur 19 sur la position du piston à double effet moyenne-pression 3, ledit capteur 14 renseignant par la même occasion ledit calculateur 19 sur la position des pistons haute-pression 8 puisque ces derniers sont solidaires du piston à double effet moyenne-pression 3.

On note que les vannes tubulaires 12 positionnées sur les circuits d'entrée-sortie moyenne-pression 15 peuvent avantageusement être des vannes dites « normalement ouvertes » comme celle dont le schéma est présenté en figures 6 et 7, c'est-à-dire que si aucun courant électrique n'est appliqué aux bornes de leur bobine de fil conducteur 29, leur collerette de contact 34 reste maintenue à une certaine distance de la surface d'obturation 27 par le ressort d'obturation 28.

On note sur la figure 1 que les vannes tubulaires 12 positionnées sur les circuits d'entrée-sortie haute-pression 16 peuvent avantageusement être des vannes dites « normalement fermées», c'est-à-dire que si aucun courant électrique n'est appliqué aux bornes de leur bobine de fil conducteur 29, leur collerette de contact 34 reste maintenue en contact avec la surface d'obturation 27 par le ressort d'obturation 28. Cette configuration de vanne tubulaire 12 est montrée plus en détait sur les figures 3, 4 et 5.

On note également sur les figures 1, 3, 4 et 5 que les vannes tubulaires 12 positionnées sur les circuits d'entrée-sortie haute-pression 16 comportent avantageusement une platine flottante 33 qui constitue avec le carter de vanne 21 un clapet anti-retour, ladite platine 33 pouvant porter de manière étanche sur un siège de platine 39 aménagé dans le carter de vanne 21.

On remarque en figure 1 l'orientation et le branchement particulier desdites vannes 12 qui met en relation leur chambre annulaire interne 22 et leur chambre d'équilibrage 31 avec les bons organes trouvés en figure 2, de sorte que les clapets anti-retour que constituent les platines flottantes 33 avec leur carter de vanne 21 puissent opérer comme le requiert le fonctionnement du convertisseur de pression 1 suivant l'invention.

Ceci exposé, on note que lorsque le convertisseur de pression 1 suivant l'invention est utilisé comme amplificateur de pression, l'étage moyenne-pression 44 fonctionne en mode « moteur », tandis que l'étage haute-pression 45 fonctionne en mode « pompe » et inversement, lorsque ledit convertisseur 1 est utilisé comme réducteur de pression, l'étage moyenne-pression 44 fonctionne en mode « pompe », tandis que l'étage haute-pression 45 fonctionne en mode « moteur ».

On remarque que lorsque l'étage moyenne-pression 44 fonctionne en mode « moteur », seuls les actionneurs de vanne 13 des vannes tubulaires 12 dudit étage 44 sont sollicités pour fermer lesdites vannes 12 dont nous avons vu précédemment qu'elles sont « normalement ouvertes », les actionneurs de vanne 13 des vannes tubulaires 12 de l'étage haute-pression 45 restant non sollicités tandis que ledit étage 45 opère en mode « pompe ».

Ainsi, les actionneurs de vanne 13 de l'étage moyenne-pression 44 obligent le moteur-pompe hydraulique 42 à forcer de l'huile sous pression alternativement dans la chambre moyenne-pression 6 placée - sur les figures 1 et 2 - à gauche du piston à double effet moyenne-pression 3, puis dans celle placée à droite dudit piston 3.

Le moment où l'huile expulsée par le moteur-pompe hydraulique 42 change de destination et cesse d'alimenter une chambre moyenne-pression 6 pour alimenter l'autre, est déterminé par le calculateur de gestion du convertisseur 19 en fonction de la position du piston à double effet moyenne-pression 3 que lui retourne le capteur de position de piston 14.

Le fonctionnement du convertisseur 1 suivant l'invention se comprend aisément à la vue des figures 1 et 2 sur lesquelles, pour plus de clarté, on a repéré les vannes tubulaires 12 de l'étage moyenne-pression 44 avec les lettres **A, B, C** et **D** tandis que les vannes tubulaires 12 de l'étage haute-pression 45 sont repérées avec les lettres **E, F, G** et **H.**

De façon similaire et pour une meilleure compréhension du fonctionnement du convertisseur 1 suivant l'invention, les mentions **d1** et **d2** figurent au dessus des flèches indiquant la direction du déplacement du piston à double effet moyenne-pression 3. Ladite direction est également celle des pistons haute-pression 8 puisque ces derniers sont solidaires du piston à double effet moyenne-pression 3. La mention **d1** indique ainsi que ledit piston à double effet moyenne-pression 3 se déplace vers la gauche, tandis que la mention **d2** indique que ce même piston 3 se déplace vers la droite.

Lorsque le convertisseur 1 suivant l'invention doit transformer la pression hydraulique pouvant être de trois cents bars trouvée en sortie de pompe 48 en une pression hydraulique six fois plus élevée destinée à être stockée dans l'accumulateur de pression 41, par exemple lors du freinage du véhicule automobile non représenté, le calculateur de gestion du convertisseur 19 ferme par exemple simultanément les vannes tubulaires 12 **B** et 12 **C** en mettant sous tension leur bobine de fil conducteur 29. L'huile expulsée en sortie de pompe 48 est ainsi forcée à remplir la chambre moyenne-pression 6 de droite via la vanne tubulaire 12 **D** qui est ouverte puisque « normalement ouverte », tandis que l'huile contenue dans la chambre moyenne-pression 6 de gauche n'a d'autre possibilité que de sortir via la vanne tubulaire 12 **A** après être passée au travers du clapet anti-retour de vanne 40 qui coopère avec ladite vanne tubulaire 12 **A**, pour retourner en entrée de pompe 47. En conséquence, le piston à double effet moyenne-pression 3 se déplace dans le sens **d1**.

Ce faisant, l'huile comprise dans la chambre haute-pression 11 de gauche sur les figures 1 et 2 se retrouve comprimée à une pression légèrement supérieure à mille huit cents bars, puis expulsée de ladite chambre 11 vers l'accumulateur de pression 41 via le clapet anti-retour que constitue avec son carter de vanne 21 la platine flottante 33 de la vanne tubulaire 12 **G**, le clapet anti-retour identique que comprend la vanne tubulaire 12 **E** empêchant ladite huile de retourner dans le réservoir basse-pression 46.

Simultanément, la chambre haute-pression 11 de droite sur les figures 1 et 2 se retrouve décomprimée de sorte que de l'huile est aspirée dans le réservoir basse-pression 46 via le clapet anti-retour que constitue avec son carter de vanne 21 la platine flottante 33 de la vanne tubulaire 12 **F**, tandis que le clapet anti-retour identique que comprend la vanne tubulaire 12 **H** empêche toute huile qui proviendrait de l'accumulateur de pression 41 d'entrer dans ladite chambre haute-pression 11 de droite.

Durant tout ce déplacement du piston à double effet moyenne-pression 3 dans le sens **d1**, le capteur de position de piston 14 aura en permanence retourné la position dudit piston à double effet 3 au calculateur de gestion du convertisseur 19. Lorsque ce dernier détermine que ledit piston à double effet 3 est suffisamment proche de la culasse moyenne-pression 4 de gauche, il inverse le sens de déplacement dudit piston à double effet 3 de sorte que ce dernier se déplace désormais dans le sens **d2**. Pour cela, ledit calculateur cesse d'alimenter en courant électrique la bobine de fil conducteur 29 des vannes tubulaires 12 **B** et 12 **C** ce qui a pour effet de les ouvrir, tandis qu'il met sous tension la bobine de fil conducteur 29 des vannes tubulaires 12 **A** et 12 **D** ce qui a pour effet de fermer ces dernières.

Le fonctionnement du convertisseur 1 suivant l'invention est alors strictement identique dans le sens **d2,** le rôle des vannes tubulaires 12 **B** et 12 **C** étant cédé aux vannes tubulaires 12 **A** et 12 **D**, cependant que le clapet anti-retour formé par la platine flottante 33 des vannes tubulaire 12 **G** et 12 **F** se ferme sous l'effet de la pression tandis que celui des vannes tubulaire 12 **E** et 12 **H** s'ouvre, pour les mêmes raisons.

Lorsque le convertisseur 1 suivant l'invention doit transformer la pression de par exemple mille huit cents bars stockée dans l'accumulateur de pression 41 en une pression six fois plus faible pour alimenter l'entrée de pompe 47, par exemple lors de la ré accélération du véhicule automobile non représenté, le calculateur de gestion du convertisseur 19 ouvre par exemple simultanément les vannes tubulaires 12 **H** et 12 **E** en mettant sous tension leur bobine de fil conducteur 29.

Ainsi, l'huile sous pression stockée dans l'accumulateur de pression 41 pénètre dans la chambre haute-pression 11 de droite via la vanne tubulaire 12 **H**, ladite huile poussant alors sur le piston haute-pression 8 de droite, tandis que le piston haute-pression 11 de gauche expulse l'huile contenue dans la chambre haute-pression 11 de gauche dans le réservoir basse-pression 46 via la vanne tubulaire 12 **E**.

En conséquence, le piston à double effet moyenne-pression 3 se déplace suivant la direction **d1** et comprime l'huile contenue dans la chambre moyenne-pression 6 de gauche. Ceci a pour effet d'une part, d'expulser ladite huile hors de ladite chambre 6 via le clapet anti-retour de vanne 40 monté en série avec la vanne tubulaire 12 **A**, le clapet anti-retour de vanne 40 monté en série avec la vanne tubulaire 12 **C** restant fermé sous l'effet de la pression, et d'autre part, d'alimenter l'entrée de pompe 47 en huile dont la pression peut être par exemple de trois cents bars. En outre, la chambre moyenne-pression 6 de droite reçoit l'huile sous basse pression provenant de la sortie de pompe 48 via le clapet anti-retour de vanne 40 monté en série avec la vanne tubulaire 12 **D**. Il résulte de ce fonctionnement que le moteur-pompe hydraulique 42 entraîne la roue 43 du véhicule automobile non représenté, de sorte à accélérer ce dernier.

Durant le déplacement du piston à double effet moyenne-pression 3 dans le sens **d1,** le capteur de position de piston 14 aura également en permanence retourné la position dudit piston à double effet 3 au calculateur de gestion du convertisseur 19. Ainsi, lorsque ce dernier détermine que ledit piston à double effet 3 est suffisamment proche de la culasse moyenne-pression 4 de gauche, il inverse le sens de déplacement dudit piston à double effet 3 de sorte que ce dernier se déplace désormais dans le sens **d2**. Pour cela, ledit calculateur 19 cesse d'alimenter en courant électrique la bobine de fil conducteur 29 des vannes tubulaires 12 **H** et 12 **E** ce qui a pour effet de les fermer, tandis qu'il met sous tension la bobine de fil conducteur 29 des vannes tubulaires 12 **G** et 12 **F** ce qui a pour effet d'ouvrir ces dernières.

Le fonctionnement du convertisseur 1 suivant l'invention est alors strictement identique dans le sens **d2,** le rôle des vannes tubulaires 12 **H** et 12 **E** étant cédé aux vannes tubulaires 12 **G** et 12 **F,** cependant que les clapets anti-retour de vanne 40 montés en série avec les vannes tubulaires 12 **D** et 12 **A** se ferment naturellement sous l'effet de la pression tandis que les clapets anti-retour de vanne 40 montés en série avec les vannes tubulaires 12 **C** et 12 **B** s'ouvrent, également sous l'effet de la pression.

On remarque que le calculateur de gestion du convertisseur 19 peut toujours assurer - notamment grâce au capteur de position de piston 14 - un contrôle précis des entrées et sorties d'huile de l'étage moyenne-pression 44 ou de l'étage haute-pression 45 lorsque ceux-ci fonctionnent en mode « moteur ». Ceci constitue un avantage décisif par rapport aux amplificateurs de pression basés sur des tiroirs ou des lumières respectivement actionnés ou découverts mécaniquement par le piston à double effet moyenne-pression 3. En effet, ce mode de fonctionnement du convertisseur 1 suivant l'invention évite tout retour indésirable d'huile dans les circuits d'entrée-sortie moyenne-pression 15 ou dans les circuits d'entrée-sortie haute-pression 16, ou encore, dans les chambres moyenne-pression 6 ou dans les chambres haute-pression 11. En outre ledit ce mode de fonctionnement évite toute fuite entre les différents circuits d'entrée-sortie moyenne-pression 15 ou entre les différents circuits d'entrée-sortie haute-pression 16 et de façon générale, toute perte énergétique inutile.

Cette stratégie d'asservissement du fonctionnement du convertisseur de pression hydraulique réversible à vannes tubulaires 1 suivant la présente invention à son calculateur de gestion du convertisseur 19 permet également un fonctionnement régulier dudit convertisseur 1 de sorte - par exemple - que le débit d'huile en entrée de pompe 47 et/ou en sortie de pompe 48 soit le plus constant et le plus régulier possible.

Il faut également souligner l'avantage déterminant que procurent les vannes tubulaires 12 lorsque celles-ci sont constituées - comme montré en figures 3 à 8 - d'un tube rectiligne 20. En effet, cette configuration permet d'obtenir un débit d'huile important entre la collerette de contact 34 et le siège d'obturation 27 sans qu'il ne soit nécessaire à l'actionneur de vanne 13 de produire un effort important pour mouvoir le tube rectiligne 20.

On remarque d'ailleurs que la section du cylindre de tube 24 peut avantageusement être légèrement plus petite que la section du contact annulaire formé entre la collerette de contact 34 et le siège d'obturation 27 de sorte que la pression régnant dans la chambre annulaire interne 22 tende à plaquer la collerette de contact 34 contre ledit siège 27 lorsque ladite pression est supérieure à celle régnant dans le conduit d'équilibrage 32.

Selon ce principe, la collerette de contact 34 forme avec le siège d'obturation 27 une bonne étanchéité, tout comme le cylindre de tube 24 forme également avec le tube rectiligne 20 une étanchéité satisfaisante.

Ainsi, comme l'illustrent les figures 3 à 8, une bobine de fil conducteur 29 consommant une faible puissance électrique peut attirer un noyau ou palette magnétique 30 à titre d'actionneur de vanne 13, même si la vanne tubulaire 12 fonctionne sous des pressions particulièrement élevées, pouvant atteindre deux milles bars et plus.

Les figures 3 à 5 illustrent le fonctionnement de la vanne tubulaire 12 lorsque cette dernière est dite « normalement fermée », La figure 3 montre ladite vanne 12 au repos, sa collerette de contact 34 restant maintenue en contact avec le siège d'obturation 27 par le ressort d'obturation 28.

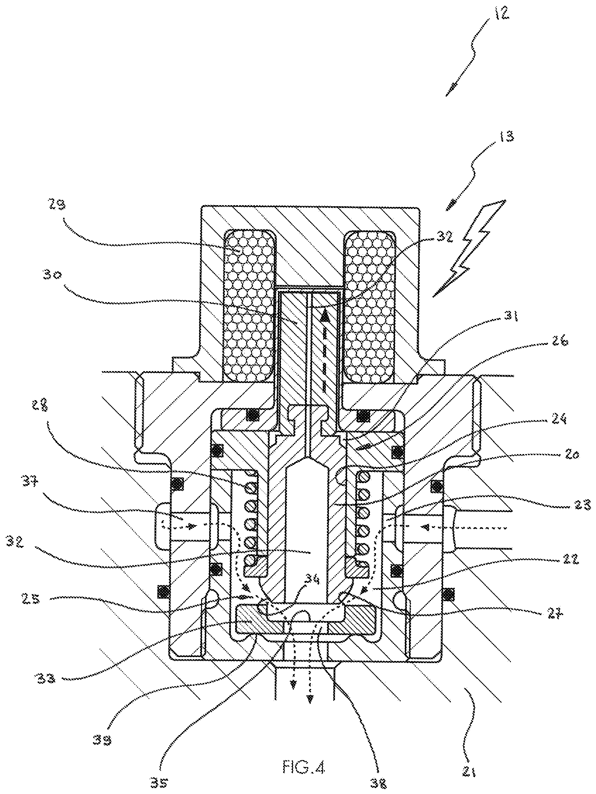

Comme montré en figure 4, lorsque un courant électrique traverse la bobine de fil conducteur 29, cette dernière attire le noyau ou palette magnétique 30 qui - via l'effort appliqué au tube rectiligne 20 par ledit noyau 30 - décolle la collerette de contact 34 du siège d'obturation 27 ce qui permet à l'huile sous pression contenue dans la chambre annulaire interne 22 de s'échapper vers l'orifice d'entrée-sortie de tube rectiligne 35. Cette action est toujours commandée par le calculateur de gestion du convertisseur 19.

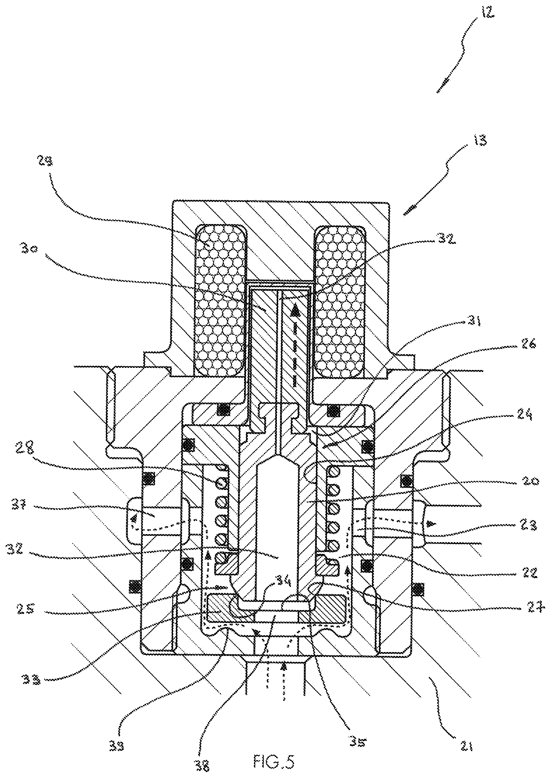

Comme l'illustre la figure 5, lorsque la pression régnant dans le conduit d'entrée-sortie de tube rectiligne 38 est supérieure à la pression régnant dans la chambre annulaire interne 22, la platine flottante 33 qui constitue avec le carter de vanne 21 un clapet anti-retour se lève de son siège de platine 39 de façon à laisser l'huile contenue dans le conduit d'entrée-sortie de tube rectiligne 38 aller dans la chambre annulaire interne 22.

Cette variante de la vanne tubulaire 12 dont le fonctionnement est illustré en figures 3 à 5 est particulièrement adaptée à l'étage haute-pression 45, sous réserve d'en correctement connecter les entrées et les sorties comme illustré en figure 1.

La variante de la vanne tubulaire 12 dont le fonctionnement est illustré en figures 6 et 7 est dite est dite « normalement ouverte ». La figure 6 montre ladite vanne 12 au repos, sa collerette de contact 34 restant éloignée du siège d'obturation 27 avec lequel elle coopère par le ressort d'obturation 28. Dans cette position, l'huile peut librement circuler entre la chambre annulaire interne 22 et l'orifice d'entrée-sortie de tube rectiligne 35.

Comme montré en figure 7, lorsque un courant électrique traverse la bobine de fil conducteur 29, cette dernière attire le noyau ou palette magnétique 30 qui - via l'effort que ce dernier applique au tube rectiligne 20 - colle la collerette de contact 34 au siège d'obturation 27 ce qui interdit à l'huile de circuler entre la chambre annulaire interne 22 et l'orifice d'entrée-sortie de tube rectiligne 35. Cette action est- là aussi - toujours commandée par le calculateur de gestion du convertisseur 19.

Cette dernière variante de la vanne tubulaire 12 dont le fonctionnement est illustré en figures 6 et 7 est particulièrement adaptée à l'étage moyenne-pression 44, d'en correctement connecter les entrées et les sorties comme illustré en figure 1 de sorte que la platine flottante 33 ne puisse jamais opérer comme un clapet anti-retour.

La variante de la vanne tubulaire 12 exposée en figure 8 interdit dans tous les cas à la platine flottante 33 d'opérer comme un clapet anti-retour. Selon cette variante, ladite platine 33 est en effet toujours maintenue plaquée sur son siège de platine 39 par la pression régnant dans la chambre annulaire interne 22 et/ou dans la chambre d'équilibrage 31 du fait de l'orifice de mise à l'air libre 17.

Selon cette configuration, la platine flottante 33 reste libre de centrer le siège d'obturation 27 par rapport à la collerette de contact 34 lorsqu'aucune pression ne règne dans lesdites chambres 22, 31 et ceci, grâce à l'effort produit par le ressort d'obturation 38 sur ladite collerette 34, tandis qu'en fonctionnement, tout déplacement radial ou axial de ladite platine 33 est rendu impossible par l'effort que produit la pression régnant dans lesdites chambres 22, 31 sur ladite platine 33 du fait qu'aucune pression antagoniste n'est appliquée au niveau de l'orifice de mise à l'air libre 17.

Il doit être entendu que la description qui précède n'a été donnée qu'à titre d'exemple et quelle ne limite nullement le domaine de l'invention dont on ne sortirait pas en remplaçant les détails d'exécution décrits par tout autre équivalent.

## Revendications

1. Convertisseur de pression hydraulique réversible à vannes tubulaires (1) **caractérisé en ce qu'**il comprend :
• Un étage moyenne-pression (44) constitué d'un cylindre moyenne-pression (2) dont les deux extrémités sont chacune fermées par une culasse moyenne-pression (4), et dans lequel translate de façon étanche un piston à double effet moyenne-pression (3) qui présente face à chaque culasse moyenne-pression (4) une face de pression (5) tandis que ledit cylindre (2), lesdites culasses (4) et lesdites faces de pression (5) forment deux chambres moyenne-pression (5) positionnées axialement de part et d'autre du piston à double effet moyenne-pression (3) ;
• Au moins un étage haute-pression (45) constitué d'une tige de liaison inter-pistons (7) par face de pression (5) ladite tige (7) comportant une première extrémité solidaire du piston à double effet moyenne-pression (3) et une deuxième extrémité solidaire d'un piston haute-pression (8), ladite tige (7) traversant de façon étanche la culasse moyenne-pression (4) qui est positionnée de son coté de sorte à déboucher dans un cylindre haute-pression (9) dont le diamètre est plus petit que celui du cylindre moyenne-pression (2), tandis que le piston haute-pression (8) peut translater de façon étanche dans le cylindre haute-pression (9) ce dernier étant fermé par une culasse haute-pression (10) de sorte à constituer avec ledit piston haute-pression (8) une chambre haute-pression (11) ;
• Au moins une vanne tubulaire (12) par chambre moyenne-pression (5) pouvant mettre cette dernière en relation avec un circuit d'entrée-sortie moyenne-pression (15), ladite vanne (12) coopérant avec un actionneur de vanne (13) indépendant et au moins une vanne tubulaire (12) par chambre haute-pression (11) pouvant mettre cette dernière en relation avec un circuit d'entrée-sortie haute-pression (16), ladite vanne (12) pouvant être actionnée en ouverture ou en fermeture par un actionneur de vanne (13) indépendant, lesdites vannes tubulaires (12) comprenant respectivement au moins un tube rectiligne (20) évidé dans le sens axial pour former un conduit d'équilibrage (32), ledit tube (20) étant logé avec un faible jeu dans un cylindre de tube (24) avec lequel il constitue une étanchéité, et ledit tube (20) pouvant se déplacer en translation longitudinale dans ledit cylindre (24) ce dernier étant rapporté ou aménagé dans un carter de vanne (21) à l'intérieur duquel est aménagée une chambre annulaire interne (22) dans laquelle débouche un orifice d'entrée-sortie de chambre annulaire (23) qui communique avec un conduit d'entrée-sortie de chambre annulaire (37), ledit cylindre (24) débouchant dans ladite chambre (22) celle-ci comportant, à l'opposé dudit cylindre (24) et dans le même axe, un siège d'obturation (27) tandis que le tube rectiligne (20) comporte d'une part, une première extrémité (25) située dans la chambre annulaire interne (22) et terminée par une collerette de contact (34) qui peut entrer en contact annulaire avec le siège d'obturation (27) de façon externe au conduit d'équilibrage (32) de sorte à constituer avec ledit siège (27) une étanchéité et d'autre part, une deuxième extrémité (26) qui débouche dans une chambre d'équilibrage (31) et qui est mécaniquement reliée à l'actionneur de vanne (13), le conduit d'équilibrage (32) établissant une communication entre le siège d'obturation (27) et la chambre d'équilibrage (31),
• Au moins un capteur de position de piston (14) qui peut transmettre à un calculateur de gestion du convertisseur (19) la position du piston à double effet moyenne-pression (3) ou la position de l'un quelconque des pistons haute-pression (8).

2. Convertisseur de pression hydraulique réversible à vannes tubulaires (1) suivant la revendication 1, **caractérisé en ce que** le conduit d'équilibrage (32) communique avec un orifice d'entrée-sortie de tube rectiligne (35) qui communique avec un conduit d'entrée-sortie de tube rectiligne (38) qui est aménagé au centre du siège d'obturation (27) et qui traverse ce dernier dans le sens axial, ledit orifice (35) étant situé à l'intérieur du contact annulaire que peut constituer la collerette de contact (34) avec le siège d'obturation (27).

3. Convertisseur de pression hydraulique réversible à vannes tubulaires (1) suivant la revendication 1, **caractérisé en ce que** le conduit d'équilibrage (32) communique avec un orifice d'entrée-sortie de tube rectiligne (35) qui débouche dans la chambre d'équilibrage (31).

4. Convertisseur de pression hydraulique réversible à vannes tubulaires (1) suivant la revendication 3, **caractérisé en ce que** le tube rectiligne (20) comporte au moins un conduit radial d'entrée-sortie (36) aménagé radialement dans ledit tube (20) et dont la première extrémité débouche dans le conduit d'équilibrage (32) tandis que sa deuxième extrémité débouche dans la chambre d'équilibrage (31).

5. Convertisseur de pression hydraulique réversible à vannes tubulaires (1) suivant la revendication 1, **caractérisé en ce que** des moyens d'étanchéité sont intercalés entre le tube rectiligne (20) et le cylindre de tube (24).

6. Convertisseur de pression hydraulique réversible à vannes tubulaires (1) suivant la revendication 1, **caractérisé en ce qu'**un ressort d'obturation (28) coopère avec le tube rectiligne (20) pour maintenir la collerette de contact (34) en contact avec la surface d'obturation (27).

7. Convertisseur de pression hydraulique réversible à vannes tubulaires (1) suivant la revendication 1, **caractérisé en ce qu'**un ressort d'obturation (28) coopère avec le tube rectiligne (20) pour maintenir la collerette de contact (34) à une certaine distance de la surface d'obturation (27).

8. Convertisseur de pression hydraulique réversible à vannes tubulaires (1) suivant la revendication 1, **caractérisé en ce que** l'actionneur de vanne (13) comprend une bobine de fil conducteur (29) qui attire un noyau ou palette magnétique (30) lorsque ladite bobine (29) est traversée par un courant électrique, ledit noyau ou palette (30) étant directement ou indirectement solidaire de la deuxième extrémité (26) du tube rectiligne (20).

9. Convertisseur de pression hydraulique réversible à vannes tubulaires (1) suivant la revendication 8, **caractérisé en ce que** la bobine de fil conducteur (29) est logée à l'intérieur de la chambre d'équilibrage (31).

10. Convertisseur de pression hydraulique réversible à vannes tubulaires (1) suivant la revendication 8, **caractérisé en ce que** la bobine de fil conducteur (29) est logée à l'extérieur de la chambre d'équilibrage (31), le champ magnétique généré par ladite bobine (29) lorsqu'elle est traversée par un courant électrique passant au travers de la paroi externe de ladite chambre (31) de sorte à exercer un effort sur le noyau ou palette magnétique (30).

11. Convertisseur de pression hydraulique réversible à vannes tubulaires (1) suivant la revendication 1, **caractérisé en ce que** la collerette de contact (34) est troncosphérique et présente une ligne de contact avec le siège d'obturation (27) similaire à celle que forme une bille portant sur un siège.

12. Convertisseur de pression hydraulique réversible à vannes tubulaires (1) suivant la revendication 1, **caractérisé en ce que** le siège d'obturation (27) est aménagé sur une platine flottante (33) libre de s'aligner radialement avec la collerette de contact (34) lorsque celle-ci entre en contact avec le siège d'obturation (27) tandis que ladite platine (33) porte de façon étanche sur un siège de platine (39) aménagé dans le carter de vanne (21).

13. Convertisseur de pression hydraulique réversible à vannes tubulaires (1) suivant les revendications 2 et 12, **caractérisé en ce que** la platine flottante (33) constitue avec le carter de vanne (21) un clapet anti-retour qui peut s'ouvrir lorsque la pression régnant dans le conduit d'entrée-sortie de tube rectiligne (38) est supérieure à la pression régnant dans la chambre annulaire interne (22), ladite platine (33) portant sinon de façon étanche sur le siège de platine (39).

14. Convertisseur de pression hydraulique réversible à vannes tubulaires (1) suivant la revendication 1, **caractérisé en ce que** la section du contact annulaire formé entre la collerette de contact (34) et le siège d'obturation (27) est légèrement plus grande que la section du cylindre de tube (24).

15. Convertisseur de pression hydraulique réversible à vannes tubulaires (1) suivant la revendication 1, **caractérisé en ce qu'**un clapet anti-retour de vanne (40) est monté en parallèle de la vanne tubulaire (12) et sur le même circuit (15, 16) quel que soit ce dernier, ou en série avec ladite vanne (12) et avant ou après cette dernière.

16. Convertisseur de pression hydraulique réversible à vannes tubulaires (1) suivant les revendications 3 et 12, **caractérisé en ce que** le siège d'obturation (27) est traversé axialement par un orifice de mise à l'air libre (17).

## Patentansprüche

1. Umkehrbarer Hydraulikdruckwandler mit rohrförmigen Ventilen (1), **dadurch gekennzeichnet, dass** er enthält:
• eine Mitteldruckstufe (44), die aus einem Mitteldruckzylinder (2) besteht, dessen zwei Enden je von einem Mitteldruckzylinderkopf (4) verschlossen werden, und in dem ein doppeltwirkender Mitteldruckkolben (3) sich dicht translatorisch verschiebt, der gegenüber jedem Mitteldruckzylinderkopf (4) eine Druckseite (5) aufweist, während der Zylinder (2), die Zylinderköpfe (4) und die Druckseiten (5) zwei Mitteldruckkammern (5) bilden, die axial zu beiden Seiten des doppeltwirkenden Mitteldruckkolbens (3) positioniert sind;
• mindestens eine Hochdruckstufe (45), die aus einer Verbindungsstange zwischen Kolben (7) pro Druckseite (5) besteht, wobei die Stange (7) ein erstes Ende fest mit dem doppeltwirkenden Mitteldruckkolben (3) verbunden und ein zweites Ende fest mit einem Hochdruckkolben (8) verbunden aufweist, wobei die Stange (7) den auf ihrer Seite positionierten Mitteldruckzylinderkopf (4) dicht durchquert, um in einem Hochdruckzylinder (9) zu münden, dessen Durchmesser kleiner ist als derjenige des Mitteldruckzylinders (2), während der Hochdruckkolben (8) sich im Hochdruckzylinder (9) dicht translatorisch verschieben kann, wobei letzterer von einem Hochdruckzylinderkopf (10) verschlossen wird, um mit dem Hochdruckkolben (8) eine Hochdruckkammer (11) zu bilden;
• mindestens ein rohrförmiges Ventil (12) pro Mitteldruckkammer (5), das letztere mit einem Mitteldruck-Eingang/Ausgang (15) in Verbindung setzen kann, wobei das Ventil (12) mit einem unabhängigen Ventilstellantrieb (13) zusammenwirkt, und mindestens ein rohrförmiges Ventil (12) pro Hochdruckkammer (11) letztere mit einem Hochdruck-Eingang/Ausgang (16) in Verbindung setzen kann, wobei das Ventil (12) von einem unabhängigen Ventilstellantrieb (13) geöffnet oder geschlossen werden kann, wobei die rohrförmigen Ventile (12) je mindestens ein in axialer Richtung ausgehöhltes geradliniges Rohr (20) enthalten, um einen Ausgleichskanal (32) zu bilden, wobei das Rohr (20) mit einem geringen Spiel in einem Rohrzylinder (24) angeordnet ist, mit dem es eine Dichtheit bildet, und das Rohr (20) sich in Längstranslation im Zylinder (24) verschieben kann, wobei letzterer in einem Ventilgehäuse (21) eingefügt oder eingerichtet ist, in dessen Innerem eine innere Ringkammer (22) eingerichtet ist, in die eine Ringkammer-Eingangs-/Ausgangsöffnung (23) mündet, die mit einem Ringkammer-Eingangs-/Ausgangskanal (37) in Verbindung steht, wobei der Zylinder (24) in die Kammer (22) mündet, wobei diese gegenüber dem Zylinder (24) und auf der gleichen Achse einen Absperrsitz (27) aufweist, während das geradlinige Rohr (20) einerseits ein erstes Ende (25), das sich in der inneren Ringkammer (22) befindet und in einem Kontaktkragen (34) endet, der mit dem Absperrsitz (27) außerhalb des Ausgleichskanals (32) in Ringkontakt kommen kann, um mit dem Sitz (27) eine Dichtheit zu bilden, und andererseits ein zweites Ende (26) aufweist, das in eine Ausgleichskammer (31) mündet und das mechanisch mit dem Ventilstellantrieb (13) verbunden ist, wobei der Ausgleichskanal (32) eine Verbindung zwischen dem Absperrsitz (27) und der Ausgleichskammer (31) aufbaut,
• mindestens einen Kolben-Positionssensor (14), der an einen Verwaltungsrechner des Wandlers (19) die Position des doppeltwirkenden Mitteldruckkolbens (3) oder die Position eines beliebigen der Hochdruckkolben (8) übertragen kann.

2. Umkehrbarer Hydraulikdruckwandler mit rohrförmigen Ventilen (1) nach Anspruch 1, **dadurch gekennzeichnet, dass** der Ausgleichskanal (32) mit einer geradlinigen Rohr-Eingangs-/Ausgangsöffnung (35) in Verbindung steht, die mit einem geradlinigen Rohr-Eingangs-/Ausgangskanal (38) in Verbindung steht, die in der Mitte des Absperrsitzes (27) eingerichtet ist und diesen letzteren in axialer Richtung durchquert, wobei die Öffnung (35) sich im Inneren des Ringkontakts befindet, den der Kontaktkragen (34) mit dem Absperrsitz (27) bilden kann.

3. Umkehrbarer Hydraulikdruckwandler mit rohrförmigen Ventilen (1) nach Anspruch 1, **dadurch gekennzeichnet, dass** der Ausgleichskanal (32) mit einer geradlinigen Rohr-Eingangs-/Ausgangsöffnung (35) in Verbindung steht, die in die Ausgleichskammer (31) mündet.

4. Umkehrbarer Hydraulikdruckwandler mit rohrförmigen Ventilen (1) nach Anspruch 3, **dadurch gekennzeichnet, dass** das geradlinige Rohr (20) mindestens einen radialen Eingangs-/Ausgangskanal (36) aufweist, der radial im Rohr (20) eingerichtet ist und dessen erstes Ende in den Ausgleichskanal (32) mündet, während sein zweites Ende in die Ausgleichskammer (31) mündet.

5. Umkehrbarer Hydraulikdruckwandler mit rohrförmigen Ventilen (1) nach Anspruch 1, **dadurch gekennzeichnet, dass** Dichtungseinrichtungen zwischen das geradlinige Rohr (20) und den Rohrzylinder (24) eingefügt sind.

6. Umkehrbarer Hydraulikdruckwandler mit rohrförmigen Ventilen (1) nach Anspruch 1, **dadurch gekennzeichnet, dass** eine Absperrfeder (28) mit dem geradlinigen Rohr (20) zusammenwirkt, um den Kontaktkragen (34) mit der Absperrfläche (27) in Kontakt zu halten.

7. Umkehrbarer Hydraulikdruckwandler mit rohrförmigen Ventilen (1) nach Anspruch 1, **dadurch gekennzeichnet, dass** eine Absperrfeder (28) mit dem geradlinigen Rohr (20) zusammenwirkt, um den Kontaktkragen (34) in einem gewissen Abstand von der Absperrfläche (27) zu halten.

8. Umkehrbarer Hydraulikdruckwandler mit rohrförmigen Ventilen (1) nach Anspruch 1, **dadurch gekennzeichnet, dass** der Ventilstellantrieb (13) eine Leiterdrahtspule (29) enthält, die einen Magnetkern oder eine Magnetpalette (30) anzieht, wenn die Spule (29) von einem elektrischen Strom durchquert wird, wobei der Kern oder die Palette (30) direkt oder indirekt fest mit dem zweiten Ende (26) des geradlinigen Rohrs (20) verbunden ist.

9. Umkehrbarer Hydraulikdruckwandler mit rohrförmigen Ventilen (1) nach Anspruch 8, **dadurch gekennzeichnet, dass** die Leiterdrahtspule (29) im Inneren der Ausgleichskammer (31) untergebracht ist.

10. Umkehrbarer Hydraulikdruckwandler mit rohrförmigen Ventilen (1) nach Anspruch 8, **dadurch gekennzeichnet, dass** die Leiterdrahtspule (29) außerhalb der Ausgleichskammer (31) untergebracht ist, wobei das von der Spule (29) erzeugte Magnetfeld, wenn sie von einem elektrischen Strom durchquert wird, die Außenwand der Kammer (31) durchquert, um eine Kraft auf den Magnetkern oder die Magnetpalette (30) auszuüben.

11. Umkehrbarer Hydraulikdruckwandler mit rohrförmigen Ventilen (1) nach Anspruch 1, **dadurch gekennzeichnet, dass** der Kontaktkragen (34) stumpfkugelig ist und eine Kontaktlinie mit dem Absperrsitz (27) gleich derjenigen aufweist, die eine auf einem Sitz aufliegende Kugel bildet.

12. Umkehrbarer Hydraulikdruckwandler mit rohrförmigen Ventilen (1) nach Anspruch 1, **dadurch gekennzeichnet, dass** der Absperrsitz (27) auf einer schwimmenden Platte (33) eingerichtet ist, die frei ist, sich mit. dem Kontaktkragen (34) radial auszurichten, wenn dieser mit dem Absperrsitz (27) in Kontakt kommt, während die Platte (33) dicht auf einem Plattensitz (39) aufliegt, der im Ventilgehäuse (21) eingerichtet ist.

13. Umkehrbarer Hydraulikdruckwandler mit rohrförmigen Ventilen (1) nach den Ansprüchen 2 und 12, **dadurch gekennzeichnet, dass** die schwimmende Platte (33) mit dem Ventilgehäuse (21) eine Rückschlagklappe bildet, die sich öffnen kann, wenn der im geradlinigen Rohr-Eingangs-/Ausgangskanal (38) herrschende Druck höher als der in der inneren Ringkammer (22) herrschende Druck ist, wobei die Platte (33) sonst dicht auf dem Plattensitz (39) aufliegt.

14. Umkehrbarer Hydraulikdruckwandler mit rohrförmigen Ventilen (1) nach Anspruch 1, **dadurch gekennzeichnet, dass** der Querschnitt des zwischen dem Kontaktkragen (34) und dem Absperrsitz (27) gebildeten Ringkontakts geringfügig größer ist als der Querschnitt des Rohrzylinders (24).

15. Umkehrbarer Hydraulikdruckwandler mit rohrförmigen Ventilen (1) nach Anspruch 1, **dadurch gekennzeichnet, dass** eine Ventilrückschlagklappe (40) parallel zum rohrförmigen Ventil (12) und im gleichen Kreis (15, 16), unabhängig vom letzterem, oder in Reihe mit dem Ventil (12) und vor oder hinter diesem letzteren montiert ist.

16. Umkehrbarer Hydraulikdruckwandler mit rohrförmigen Ventilen (1) nach den Ansprüchen 3 und 12, **dadurch gekennzeichnet, dass** der Absperrsitz (27) axial von einer Belüftungsöffnung (17) durchquert wird.

## Claims

1. Reversible hydraulic pressure converter (1) employing tubular valves, **characterized in that** it includes:
• a medium-pressure stage (44) consisting of a medium-pressure cylinder (2) each of the two ends of which is closed by a medium-pressure head (4) and in which there moves in translation in a fluid-tight manner a double-acting medium-pressure cylinder (3) that has a pressure face (5) facing each medium-pressure head (4) while said cylinder (2), said heads (4) and said pressure faces (5) form two medium-pressure chambers (5) axially positioned on respective opposite sides of the double-acting medium-pressure piston (3);
• at least one high-pressure stage (45) consisting of a piston connecting rod (7) for each pressure face (5), said rod (7) having a first end fastened to the double-acting medium-pressure piston (3) and a second end fastened to a high-pressure piston (8), said rod (7) passing in a fluid-tight manner through the medium-pressure head (4) that is located on its side so as to extend into a high-pressure cylinder (9) the diameter of which is smaller than that of the medium-pressure cylinder (2), while the high-pressure piston (8) can move in translation in a fluid-tight manner in the high-pressure cylinder (9), the latter being closed by a high-pressure head (10) so as to constitute with said high-pressure piston (8) a high-pressure chamber (11);
• at least one tubular valve (12) for each medium-pressure chamber (5) adapted to place the latter in communication with a medium-pressure inlet-/outlet circuit (15), said valve (12) cooperating with an independent valve actuator (13) and at least one tubular valve (12) for each high-pressure chamber (11) adapted to place the latter in communication with a high-pressure inlet-outlet circuit (16), said valve (12) being adapted to be actuated to open it or to close it by an independent valve actuator (13), said tubular valves (12) respectively including at least one rectilinear tube (20) hollowed out in the axial direction to form a balancing passage (32), said tube (20) being accommodated with a small clearance in a tube cylinder (24) with which it constitutes a seal, and said tube (20) being movable in longitudinal translation in said cylinder (24), the latter being mounted on or disposed in a valve casing (21) inside which is provided an annular internal chamber (22) into which discharges an annular chamber inlet-outlet orifice (23) that communicates with an annular chamber inlet-outlet passage (37), said cylinder (24) discharging into said chamber (22), the latter including a closure seat (27) opposite and coaxial with said cylinder (24), while the rectilinear tube (20) has on the one hand a first end (25) located in the annular internal chamber (22) and terminated by a contact flange (34) that can come into annular contact with the closure seat (27) externally of the balancing passage (32) so as to constitute a seal with said seat (27) and on the other hand a second end (26) that discharges into a balancing chamber (31) and is mechanically connected to the valve actuator (13), the balancing passage (32) establishing communication between the closure seat (27) and the balancing chamber (31).
• at least one piston position sensor (14) that can transmit to a control computer of the converter (19) the position of the double-acting medium-pressure piston (3) or the position of any of the high-pressure pistons (8).

2. Reversibly hydraulic pressure converter (1) employing tubular valves according to Claim 1, **characterized in that** the balancing passage (32) communicates with a rectilinear tube inlet-outlet orifice (25) that communicates with a rectilinear tube inlet-outlet passage (38) at the center of the closure seat (27) and passes through the latter axially, said orifice (35) being located inside the annular contact that the contact flange (34) can made with the closure seat (27).

3. Reversibly hydraulic pressure converter (1) employing tubular valves according to Claim 1, **characterized in that** the balancing passage (32) communicates with a rectilinear tube inlet-outlet orifice (35) that discharges into the balancing chamber (31).

4. Reversibly hydraulic pressure converter (1) employing tubular valves according to Claim 3, **characterized in that** the rectilinear tube (20) includes at least one radial inlet-outlet passage (36) disposed radially in said tube (20) and the first end of which discharges into the balancing passage (32) while its second end discharges into the balancing chamber (31).

5. Reversibly hydraulic pressure converter (1) employing tubular valves according to Claim 1, **characterized in that** sealing means are inserted between the rectilinear tube (20) and the tube cylinder (24).

6. Reversibly hydraulic pressure converter (1) employing tubular valves according to Claim 1, **characterized in that** a closure spring (28) cooperates with the rectilinear tube (20) to hold the contact flange (34) in contact with the closure surface (27).

7. Reversibly hydraulic pressure converter (1) employing tubular valves according to Claim 1, **characterized in that** a closure spring (28) cooperates with the rectilinear tube (20) to hold the contact flange (34) at a certain distance from the closure surface (27).

8. Reversibly hydraulic pressure converter (1) employing tubular valves according to Claim 1, **characterized in that** the valve actuator (13) includes a coil (29) of conductive wire that attracts a magnetic core or armature (30) when an electrical current passes through said coil (29), said core or armature (30) being fastened directly or indirectly to the second end (26) of the rectilinear tube (20).

9. Reversibly hydraulic pressure converter (1) employing tubular valves according to Claim 8, **characterized in that** the coil (29) of conductive wire is accommodated inside the balancing chamber (31).

10. Reversibly hydraulic pressure converter (1) employing tubular valves according to Claim 8, **characterized in that** the coil (29) of conductive wire is accommodated outside the balancing chamber (31), the magnetic field generated by said coil (29) when an electrical current passes through it passing through the external wall of said chamber (31) so as to exert a force on the magnetic core or armature (30).

11. Reversibly hydraulic pressure converter (1) employing tubular valves according to Claim 1, **characterized in that** the contact flange (34) is a truncated sphere and has a line of contact with the closure seat (27) similar to that which a ball bearing on a seat forms.

12. Reversibly hydraulic pressure converter (1) employing tubular valves according to Claim 1, **characterized in that** the closure seat (27) is on a floating plate (33) free to align radially with the contact flange (34) when the latter comes into contact with the closure seat (27) while said plate (33) bears in a fluid-tight manner on a plate seat (39) in the valve casing (21).

13. Reversibly hydraulic pressure converter (1) employing tubular valves according to Claims 2 and 12, **characterized in that** the floating plate (33) constitutes with the valve casing (21) a check valve that can open when the pressure in the rectilinear tube inlet-outlet passage (38) is greater than the pressure in the annular internal chamber (22), said plate (33) otherwise bearing in a fluid-tight manner on the plate seat (39).

14. Reversibly hydraulic pressure converter (1) employing tubular valves according to Claim 1, **characterized in that** the section of the annular contact formed between the contact flange (34) and the closure seat (27) is slightly greater than the section of the tube cylinder (24).

15. Reversibly hydraulic pressure converter (1) employing tubular valves according to Claim 1, **characterized in that** a valve check valve (40) is mounted in parallel with the tubular valve (12) and on the same circuit (15, 16) whatever the latter is or in series with said valve (12) and before or after the latter.

16. Reversibly hydraulic pressure converter (1) employing tubular valves according to Claims 3 and 12, **characterized in that** a vent orifice (17) passes axially through the closure seat (27).
